# EUROPÄISCHE PATENTANMELDUNG

(11) **EP 3 970 916 A1**
(43) Veröffentlichungstag der Anmeldung: **23.03.2022**
(21) Anmeldenummer: 21197886.1
(22) Anmeldetag: 21.09.2021
(51) Int. Cl.: B25F 1/02, B25G 1/08, B62J 9/40, B25B 27/00

(54) **WERKZEUGANORDNUNG**

(30) Priorität: 21.09.2020 DE 102020124518
(71) Anmelder: SKS metaplast Scheffer-Klute GmbH, 59846 Sundern (DE)
(72) Erfinder: Kordes, Sven, 59846 Sundern (DE); Nöcker, Alexander, 59846 Sundern (DE); Grabski, Karsten, 59469 Ense (DE)
(74) Vertreter: Schäperklaus, Jochen

(57) **Zusammenfassung**

Werkzeuganordnung, insbesondere für ein Zweirad, vorzugsweise für ein Fahrrad, umfassend mindestens ein Werkzeug (2) und mindestens eine Transporthalterung (1), in oder an der das mindestens eine Werkzeug (2) gehalten werden kann, wobei die Werkzeuganordnung so gestaltet ist, dass das mindestens eine Werkzeug (2) magnetisch in oder an der Transporthalterung (1) gehalten wird.

## Beschreibung

Die vorliegende Erfindung betrifft eine Werkzeuganordnung, insbesondere für ein Zweirad, vorzugsweise für ein Fahrrad, gemäß dem Oberbegriff des Anspruchs 1.

Eine Werkzeuganordnung der vorgenannten Art ist aus der DE 10 2009 044 327 A1 bekannt. Bei der darin beschriebenen Werkzeuganordnung sind die einzelnen Werkzeuge fest an der Transporthalterung angeschraubt und dabei schwenkbar mit dieser verbunden. Es sind zwei Reihen von einander gegenüberliegenden Werkzeugen vorgesehen, die aufeinander zu geschwenkt werden können, so dass die Transporthalterung mit den Werkzeugen wenig Raum einnimmt. In diesem Zustand kann die Transporthalterung mit den Werkzeugen in einem Zwischenraum zwischen zwei miteinander verbindbaren Seitenplatten verstaut werden.

Als nachteilig dabei erweist es sich, dass die einzelnen Werkzeuge immer mit der Transporthalterung verbunden sind und daher nicht flexibel eingesetzt werden können.

Das der vorliegenden Erfindung zugrundeliegende Problem ist die Schaffung einer Werkzeuganordnung der eingangs genannten Art, bei der das mindestens eine Werkzeug aus der Transporthalterung entnehmbar ist und trotzdem nicht unbeabsichtigt aus der Transporthalterung herausfallen kann.

Diese Aufgabe wird durch eine Werkzeuganordnung der eingangs genannten Art mit den kennzeichnenden Merkmalen des Anspruchs 1 gelöst. Die Unteransprüche betreffen bevorzugte Ausgestaltungen der Erfindung.

Gemäß Anspruch 1 ist vorgesehen, dass die Werkzeuganordnung so gestaltet ist, dass das mindestens eine Werkzeug magnetisch in oder an der Transporthalterung gehalten wird. Dadurch kann das mindestens eine Werkzeug einfach aus der Transporthalterung entnommen werden kann. Weiterhin kann erreicht werden, dass das mindestens eine Werkzeug nicht unkontrolliert aus der Transporthalterung herausfällt.

Es kann vorgesehen sein, dass die Transporthalterung aus einem magnetischen Material besteht oder ein magnetisches Material umfasst und dass das mindestens eine Werkzeug aus einem magnetisierbaren Material besteht oder ein magnetisierbares Material umfasst. Alternativ kann vorgesehen sein, dass die Transporthalterung aus einem magnetisierbaren Material besteht oder ein magnetisierbares Material umfasst und dass das mindestens eine Werkzeug aus einem magnetischen Material besteht oder ein magnetisches Material umfasst.

Es besteht alternativ auch die Möglichkeit, dass die Transporthalterung aus einem magnetischen Material besteht oder ein magnetisches Material umfasst und dass das mindestens eine Werkzeug aus einem magnetischen Material besteht oder ein magnetisches Material umfasst.

Es kann vorgesehen sein, dass das magnetisierbare Material Metall ist. Beispielsweise besteht dabei die Transporthalterung aus einem magnetischen Werkstoff, während das mindestens eine Werkzeug aus Metall besteht, wodurch das Werkzeug magnetisch in der Transporthalterung gehalten wird.

Es besteht die Möglichkeit, dass das magnetische Material aus einem magnetischen Kunststoff besteht oder einen magnetischen Kunststoff umfasst oder dass das magnetische Material aus einem kunststoffgebundenen Magneten besteht oder einen kunststoffgebundenen Magneten umfasst oder dass das magnetische Material aus einem gesinterten Magneten besteht oder einen gesinterten Magneten umfasst. Derartige Materialien erlauben eine einfache Fertigung größerer Stückzahlen beispielsweise der Transporthalterung.

Es kann vorgesehen sein, dass die Werkzeuganordnung mehrere Werkzeuge umfasst, die in oder an der Transporthalterung gehalten werden können. Insbesondere kann das mindestens eine Werkzeug ein Werkzeugbit sein beziehungsweise können die Werkzeuge Werkzeugsbits sein.

Es besteht die Möglichkeit, dass die Werkzeuganordnung eine Hülle umfasst, von der die Transporthalterung zusammen mit dem mindestens einen Werkzeug aufgenommen werden kann. Die Hülle schützt die Transporthalterung zusammen mit dem mindestens einen Werkzeug vor Verschmutzungen und vor dem unabsichtlichem Lösen des mindestens einen Werkzeugs bei grober Handhabung. Dabei kann die magnetische Halterung des mindestens einen Werkzeugs in oder an der Transporthalterung gewährleisten, dass das beispielsweise als Werkzeugbit ausgebildete Werkzeug nicht unkontrolliert aus der Transporthalterung herausfällt, wenn die Transporthalterung aus der Hülle gezogen wird.

Es kann vorgesehen sein, dass die Werkzeuganordnung eine Werkzeugaufnahme umfasst, an der in einer Transportstellung die Hülle angebracht werden kann. Insbesondere ergibt sich dadurch in der Transportstellung eine kompakte Gestaltung der Werkzeuganordnung.

Es besteht die Möglichkeit, dass die Werkzeugaufnahme in einer Gebrauchsstellung das mindestens eine Werkzeug, vorzugsweise das Werkzeugbit, aufnehmen kann. Insbesondere kann die Werkzeugaufnahme zur Aufnahme des mindestens einen Werkzeugs mindestens eine Sechskant-Ausnehmung aufweisen, in die das mindestens eine Werkzeug teilweise eingebracht werden kann. Dadurch können die der Transporthalterung einfach entnehmbaren Werkzeugbits an der Werkzeugaufnahme angebracht und beispielsweise dazu benutzt werden, an einem Zweirad eine Schraube zu lösen oder festzuziehen.

Es kann vorgesehen sein, dass die Werkzeugaufnahme eine Knarre umfasst, insbesondere wobei die mindestens eine Sechskant-Ausnehmung oder eine erste der Sechskant-Ausnehmungen Teil dieser Knarre ist. Eine Knarre wird insbesondere auch als Ratsche bezeichnet. Durch eine Knarre lässt sich beispielsweise eine Schraube einfach und schnell lösen oder festziehen.

Es kann alternativ oder zusätzlich vorgesehen sein, dass die Werkzeugaufnahme dazu eingerichtet ist, eines der Werkzeugbits wie mit einem Schraubendreher zu drehen, insbesondere wobei die mindestens eine Sechskant-Ausnehmung oder eine zweite der Sechskant-Ausnehmungen derart gestaltet und angeordnet ist, dass ein in diese Sechskant-Ausnehmung eingestecktes Werkzeugbit wie mit einem Schraubendreher gedreht werden kann. Auch durch eine derartige Gestaltung lässt sich ein Werkzeugbit einfach verwenden.

Es besteht die Möglichkeit, dass die Werkzeugaufnahme an einem ihrer Enden eine Ausnehmung aufweist, die als Maulschlüssel dient. Dadurch kann die Werkzeuganordnung vielseitiger verwendet werden. Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine perspektivische Ansicht einer erfindungsgemäßen Werkzeuganordnung im zusammengebauten Zustand;
- Fig. 2: eine perspektivische Ansicht der Werkzeuganordnung gemäß Fig. 1 im teilweise demontierten Zustand;
- Fig. 3: eine perspektivische Ansicht der Werkzeuganordnung gemäß Fig. 1 im demontierten Zustand;
- Fig. 4: eine Seitenansicht der Transporthalterung zusammen mit dem mindestens einen Werkzeug im miteinander verbundenen Zustand;
- Fig. 5: eine Seitenansicht der Transporthalterung zusammen mit dem mindestens einen Werkzeug im nicht miteinander verbundenen Zustand;
- Fig. 6: eine perspektivische Ansicht der Transporthalterung zusammen mit dem mindestens einen Werkzeug im nicht miteinander verbundenen Zustand;
- Fig. 7: eine Draufsicht auf die Werkzeuganordnung gemäß Fig. 1 im zusammengebauten Zustand;
- Fig. 8: eine Ansicht gemäß den Pfeilen VIII - VIII in Fig. 7;
- Fig. 9: eine perspektivische Ansicht der Werkzeuganordnung gemäß Fig. 1 im zusammengebauten Zustand mit einem in die Sechskant-Ausnehmung eingesteckten Werkzeugbit;
- Fig. 10: eine Seitenansicht der Werkzeuganordnung gemäß Fig. 1 im zusammengebauten Zustand mit einem in die Sechskant-Ausnehmung eingesteckten Werkzeugbit;
- Fig. 11: eine Vorderansicht der Werkzeuganordnung gemäß Fig. 1 im zusammengebauten Zustand mit einem in die Sechskant-Ausnehmung eingesteckten Werkzeugbit.

In den Figuren sind gleiche und funktional gleiche Teile mit gleichen Bezugszeichen versehen.

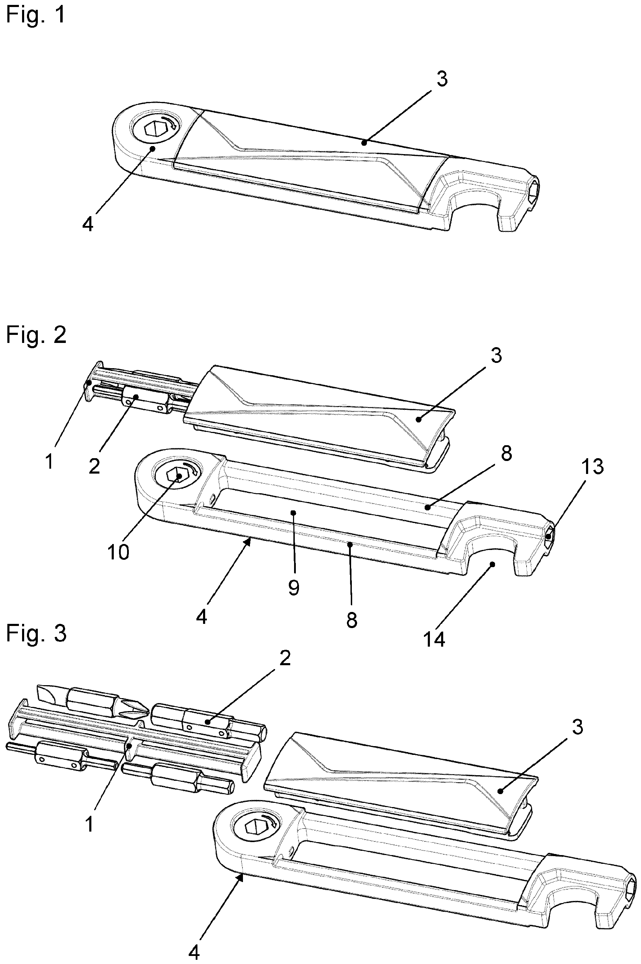

Die in den Figuren abgebildete Werkzeuganordnung ist ein sogenanntes Minitool für ein Fahrrad. Die Werkzeuganordnung umfasst eine Transporthalterung 1, in der eine Mehrzahl von Werkzeugen 2 aufgenommen und gehalten sind. Die Werkzeuganordnung umfasst weiterhin eine Hülle 3, von der die Transporthalterung 1 aufgenommen werden kann, sowie eine Werkzeugaufnahme 4, an der in einer Transportstellung die Hülle 3 angebracht werden kann (siehe Fig. 1).

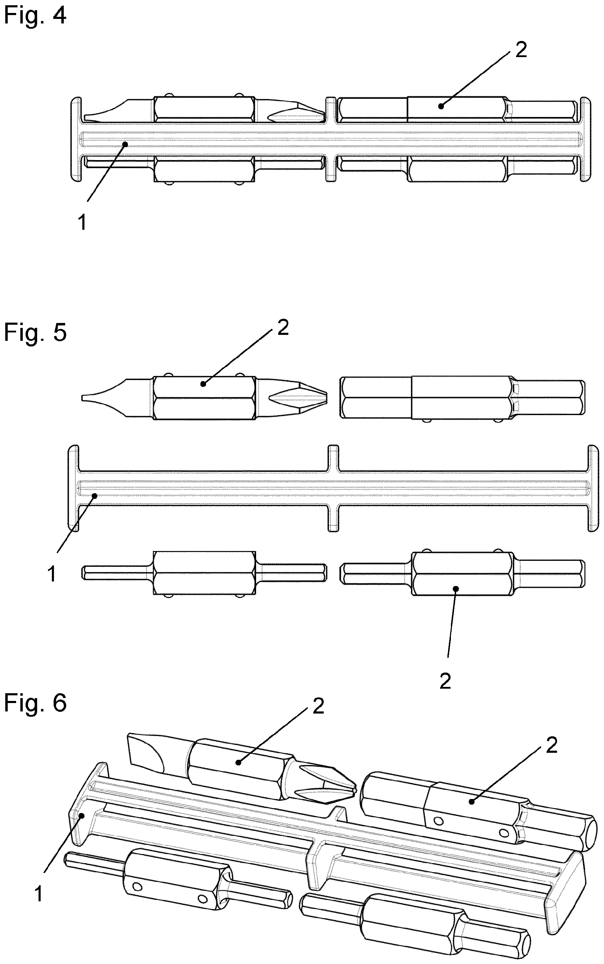

Im abgebildeten Ausführungsbeispiel sind vier als Werkzeugbits ausgebildete Werkzeuge 2 vorgesehen (siehe Fig. 4 bis Fig. 6). Es besteht durchaus die Möglichkeit, mehr oder weniger als vier Werkzeuge vorzusehen. Weiterhin können alternativ oder zusätzlich andere, nicht als Werkzeugbits ausgebildete Werkzeuge vorgesehen sein.

Die Werkzeuge 2 werden durch magnetische Kräfte in der Transporthalterung 1 gehalten. Dies kann beispielsweise dadurch realisiert werden, dass die Transporthalterung 1 aus einem magnetischen Material besteht oder ein magnetisches Material umfasst und dass die Werkzeuge 2 aus einem magnetisierbaren Material bestehen oder ein magnetisierbares Material umfassen. Beispielsweise können die Werkzeuge 2 aus Metall bestehen und die Transporthalterung 1 einteilig aus einem magnetischen Kunststoff oder einteilig aus einem kunststoffgebundenen Magneten oder einteilig aus einem gesinterten Magneten bestehen. Es besteht auch die Möglichkeit gesinterte Magnete in die Transporthalterung 1 einzusetzen, wenn diese aus einem nicht magnetischen Material besteht.

Alternativ besteht die Möglichkeit, dass die Transporthalterung 1 aus einem magnetisierbaren Material besteht oder ein magnetisierbares Material umfasst und dass die Werkzeuge 2 aus einem magnetischen Material bestehen oder ein magnetisches Material umfassen.

Weiterhin besteht alternativ die Möglichkeit, dass die Transporthalterung 1 aus einem magnetischen Material besteht oder ein magnetisches Material umfasst und dass die Werkzeuge 2 aus einem magnetischen Material bestehen oder ein magnetisches Material umfassen.

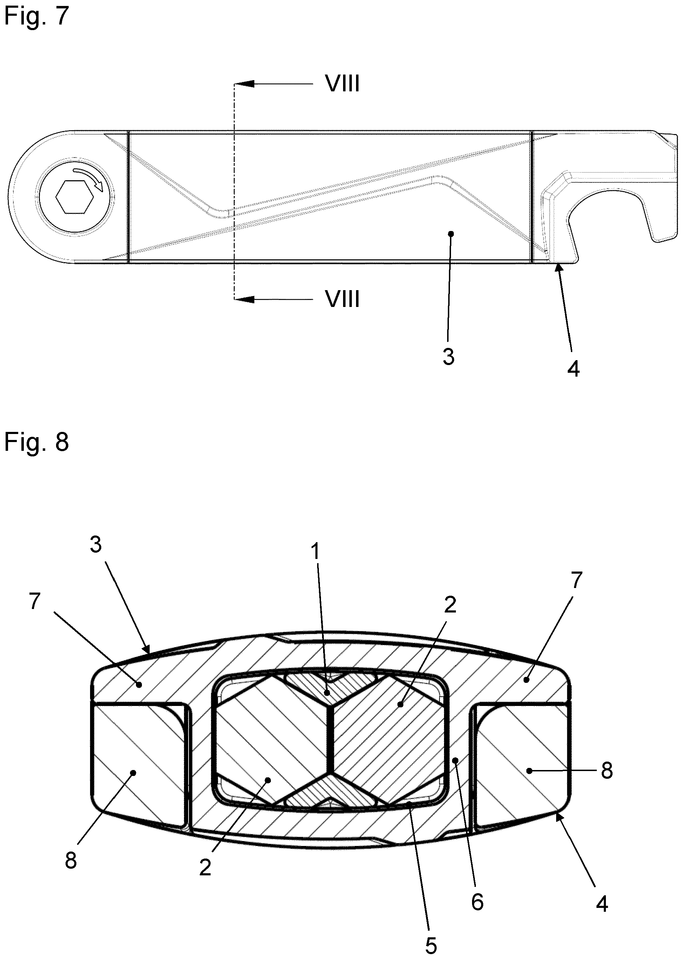

Die Hülle 3 weist einen durchgehenden, im Wesentlichen rechteckigen Hohlraum 5 auf, in den die Transporthalterung 1 eingeschoben werden kann (siehe dazu Fig. 8). Die Hülle 3 weist im Querschnitt einen den Hohlraum 5 umgebenden mittleren Teil 6 und zwei sich daran anschließende, in Fig. 8 nach links und rechts von dem mittleren Teil 6 wegragende, äußere Teile 7 auf.

An der Werkzeugaufnahme 4 kann die Hülle 3 in der Transportstellung beispielsweise durch Verklipsen oder Verrasten angebracht werden (siehe beispielsweise Fig. 1, Fig. 7 und Fig. 8). Die Werkzeugaufnahme 4 weist dazu zwei Streben 8 auf, zwischen denen ein Zwischenraum 9 für die Hülle 3 angeordnet ist (siehe Fig. 2). Im an der Werkzeugaufnahme 4 angebrachten Zustand der Hülle 3 ist der mittlere Teil 6 in dem Zwischenraum 10 angeordnet, wobei die beiden äußeren Teile 7 an den Streben 8 der Werkzeugaufnahme 4 anliegen (siehe Fig. 8).

In einer Gebrauchsstellung kann die Werkzeugaufnahme 4 eines der als Werkzeugbits ausgebildeten Werkzeuge 2 aufnehmen. Dazu weist die Werkzeugaufnahme 4 eine erste Sechskant-Ausnehmung 10 auf, die Teil einer von der Werkzeugaufnahme 4 umfassten Knarre ist.

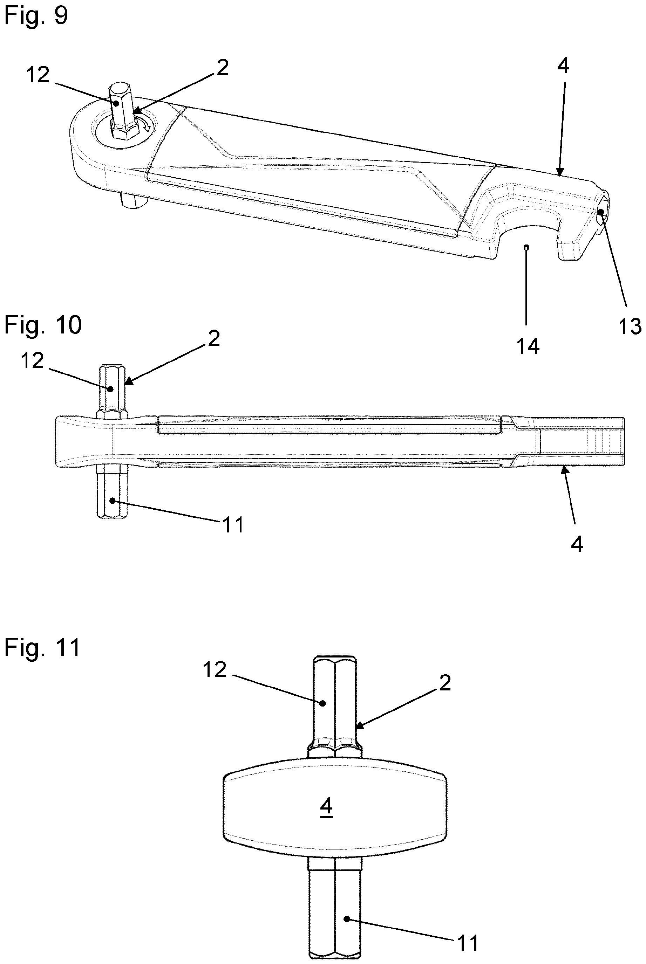

Fig. 9 bis Fig. 11 zeigen ein in die erste Sechskant-Ausnehmung 10 eingestecktes Werkzeugbit. Das Werkzeugbit ist als Doppelbit ausgebildet, das an beiden Enden eine Sechskantkontur 11, 12 aufweist, wobei insbesondere die in Fig. 11 am unteren Ende des Werkzeugs 2 angeordnete Sechskantkontur 11 einen größeren Durchmesser aufweist als die an dem oberen Ende angeordnete Sechskantkontur 12.

Zusätzlich weist die Werkzeugaufnahme 4 eine zweite Sechskant-Ausnehmung 13 auf. Bei in dieser zweiten Sechskant-Ausnehmung 3 eingestecktem Werkzeugbit (nicht abgebildet) kann dieses wie mit einem Schraubendreher gedreht werden.

Die Werkzeugaufnahme 4 weist zusätzlich an einem ihrer Enden eine Ausnehmung 14 auf, die als Maulschlüssel dient.

## Patentansprüche

1. Werkzeuganordnung, insbesondere für ein Zweirad, vorzugsweise für ein Fahrrad, umfassend
- mindestens ein Werkzeug (2),
- mindestens eine Transporthalterung (1), in oder an der das mindestens eine Werkzeug (2) gehalten werden kann,
**dadurch gekennzeichnet, dass** die Werkzeuganordnung so gestaltet ist, dass das mindestens eine Werkzeug (2) magnetisch in oder an der Transporthalterung (1) gehalten wird.

2. Werkzeuganordnung nach Anspruch 1, **dadurch gekennzeichnet, dass** die Transporthalterung (1) aus einem magnetischen Material besteht oder ein magnetisches Material umfasst **und dass** das mindestens eine Werkzeug (2) aus einem magnetisierbaren Material besteht oder ein magnetisierbares Material umfasst.

3. Werkzeuganordnung nach einem der Ansprüche 1 oder 2, **dadurch gekennzeichnet, dass** die Transporthalterung (1) aus einem magnetisierbaren Material besteht oder ein magnetisierbares Material umfasst **und dass** das mindestens eine Werkzeug (2) aus einem magnetischen Material besteht oder ein magnetisches Material umfasst.

4. Werkzeuganordnung nach einem der Ansprüche 1 bis 3,
**dadurch gekennzeichnet, dass** die Transporthalterung (1) aus einem magnetischen Material besteht oder ein magnetisches Material umfasst **und dass** das mindestens eine Werkzeug (2) aus einem magnetischen Material besteht oder ein magnetisches Material umfasst.

5. Werkzeuganordnung nach einem der Ansprüche 1 bis 4,
**dadurch gekennzeichnet, dass** das magnetisierbare Material Metall ist.

6. Werkzeuganordnung nach einem der Ansprüche 1 bis 5,
**dadurch gekennzeichnet, dass** das magnetische Material aus einem magnetischen Kunststoff besteht oder einen magnetischen Kunststoff umfasst oder **dass** das magnetische Material aus einem kunststoffgebundenem Magneten besteht oder einen kunststoffgebundenem Magneten umfasst oder **dass** das magnetische Material aus einem gesinterten Magneten besteht oder einen gesinterten Magneten umfasst.

7. Werkzeuganordnung nach einem der Ansprüche 1 bis 6,
**dadurch gekennzeichnet, dass** die Werkzeuganordnung mehrere Werkzeuge (2) umfasst, die in oder an der Transporthalterung (1) gehalten werden können.

8. Werkzeuganordnung nach einem der Ansprüche 1 bis 7,
**dadurch gekennzeichnet, dass** das mindestens eine Werkzeug (2) ein Werkzeugbit ist.

9. Werkzeuganordnung nach einem der Ansprüche 1 bis 8,
**dadurch gekennzeichnet, dass** die Werkzeuganordnung eine Hülle (3) umfasst, von der die Transporthalterung (1) zusammen mit dem mindestens einen Werkzeug (2) aufgenommen werden kann.

10. Werkzeuganordnung nach einem der Ansprüche 1 bis 9,
**dadurch gekennzeichnet, dass** die Werkzeuganordnung eine Werkzeugaufnahme (4) umfasst, an der in einer Transportstellung die Hülle (3) angebracht werden kann.

11. Werkzeuganordnung nach Anspruch 10, **dadurch gekennzeichnet, dass** die Werkzeugaufnahme (4) in einer Gebrauchsstellung das mindestens eine Werkzeug (2), vorzugsweise das Werkzeugbit, aufnehmen kann.

12. Werkzeuganordnung nach Anspruch 11, **dadurch gekennzeichnet, dass** die Werkzeugaufnahme (4) zur Aufnahme des mindestens einen Werkzeugs (2) mindestens eine Sechskant-Ausnehmung (10, 13) aufweist, in die das mindestens eine Werkzeug (2) teilweise eingebracht werden kann.

13. Werkzeuganordnung nach einem der Ansprüche 10 bis 12, **dadurch gekennzeichnet, dass** die Werkzeugaufnahme (4) eine Knarre umfasst, insbesondere wobei die mindestens eine Sechskant-Ausnehmung (10) oder eine erste der Sechskant-Ausnehmungen (10, 13) Teil dieser Knarre ist.

14. Werkzeuganordnung nach einem der Ansprüche 10 bis 13, **dadurch gekennzeichnet, dass** die Werkzeugaufnahme (4) dazu eingerichtet ist, eines der Werkzeugbits wie mit einem Schraubendreher zu drehen, insbesondere wobei die mindestens eine Sechskant-Ausnehmung (13) oder eine zweite der Sechskant-Ausnehmungen (10, 13) derart gestaltet und angeordnet ist, dass ein in diese Sechskant-Ausnehmung (13) eingestecktes Werkzeugbit wie mit einem Schraubendreher gedreht werden kann.

15. Werkzeuganordnung nach einem der Ansprüche 10 bis 14, **dadurch gekennzeichnet, dass** die Werkzeugaufnahme (4) an einem ihrer Enden eine Ausnehmung (14) aufweist, die als Maulschlüssel dient.
